# EUROPEAN PATENT APPLICATION

(11) **EP 2 113 881 A1**
(43) Date of publication of application: **04.11.2009**
(21) Application number: 08275010.0
(22) Date of filing: 29.04.2008
(51) Int. Cl.: G06Q 30/00, H04N 5/272, G06T 15/00, G06T 17/00

(54) **Image producing method and device**

(71) Applicant: Holiton Limited, London Greater London EC2A 4QS (GB)
(72) Inventor: Cupit Stuart, London EC2A 4QS (GB)
(74) Representative: ip21 Ltd

(57) **Abstract**

The invention provides a method for producing an image 7. The method comprises recording a first image of an object 4 of known dimensions, measuring the position and orientation of the object within the first image and superposing a second image 9 over the first image. The second image 9 comprises a view of a virtual model whose position and orientation are determined by the position and orientation of the object 4. The virtual model comprises both a visible portion and an occlusion portion, with neither the occlusion portion nor those parts of the visible portion covered by the occlusion portion being shown in the second image 9.

## Description

### Field of the Invention

This invention relates to a method and device for producing an image that has both real and virtual elements.

### Background to the Invention

The market for jewellery and watches is a large one, estimated to be worth almost £5 billion a year in the UK alone. Worldwide, the market in watches, rings and other jewellery is worth hundreds of billions of pounds. However selling jewellery is a difficult and insecure process. For jewellers, maintaining a shop front in which all of their stock is displayed and readily available represents a considerable expense. Not only must the space itself be maintained, but stringent security measures must be employed to reduce the risk of theft. These measures are often very expensive, both directly and because they inconvenience customers.

These difficulties can also prevent shops from carrying large ranges of jewellery, reducing the customer's choices and limiting profits. Jewellery is often a very personal purchase, chosen with great care, and many customers will be looking for a product that is as unique to them as possible. Customers who can choose from only a limited selection will be less likely to make a purchase.

Therefore, any jewellers that can carry a wider range of stock while still offering their customers a convenient way to shop would have a significant advantage. Moreover, customers may wish to commission bespoke jewellery designs and to be able to gain some idea of the appearance of these designs before committing to what is likely to be a financially significant purchase. Thus, it would be desirable to provide a system whereby customers are able to view representations of products, such as jewellery, even if those products do not yet exist. Desirably, such a system would provide a three-dimensional representation of the product. More desirably, the system would provide a three-dimensional representation of the product as worn by the customer. Even more desirably, the system would provide such a representation in real time, so that the customer is able to try on the jewellery, at least virtually.

To date, no such system exists. The present invention, at least in its preferred embodiments, seeks to provide such a system.

### Summary of the Invention

Accordingly, this invention provides a method for generating a composite image. The method comprises recording a first image including an image of a target object, determining the position and orientation of the target object within the first image, and superposing a second image over the first image to generate the composite image. The second image comprises a view of a virtual model and the virtual model comprises a visible object and an occlusion object. The relative position and orientation of the visible object and the occlusion object determine which parts of the visible object are visible in the second image. The position and orientation of at least the occlusion object in the second image are determined by reference to the position and orientation of the target object within the first image.

Therefore the invention provides a method that can take an image such as a picture of a customer in a shop and superimpose virtual items such as jewellery onto the image of the wrists, fingers, neck or other parts of the customer's anatomy, as desired. This removes the need for costly and cumbersome display cases and allows the customer to experiment quickly and easily with different styles, colours and sizes.

By including an occlusion object in the virtual model, those parts of the virtual object that should not be visible in the composite image can be occluded so that they do not appear. Typically, the first image will not include any depth information, for example the first image may be a simple two-dimensional image. By identifying the position and orientation of the target object in the first image a three-dimensional position and orientation of that object can be implied. This position and orientation can be used to correctly position and orientate the occlusion object in three dimensions within the composite image, so that the virtual object is correctly occluded and the illusion of a three-dimensional virtual object is maintained.

In a preferred embodiment, the position and orientation of both the virtual object and the occlusion object in the second image are determined by reference to the position and orientation of the target object within the first image. Thus, the same target object is used to locate both the virtual object and the occlusion object. It would be possible for different target objects to be used to position and orientate the virtual object and the occlusion object, but this is not required for the basic functionality of the system. When the same target object is used to locate both the virtual object and the occlusion object, the relative locations of the virtual object and the occlusion object may be varied, for example in response to user input.

The first image may be a still photograph, typically a digital photograph. In the preferred embodiment, the first image is a moving image, i.e. a succession of images. Typically, the first image and the resultant composite image will be in the form of digital image data. The first image may be a moving image and the composite image may be a moving image. The first image may be recorded in real time, for example by a suitable camera, and the composite image may be generated in real time.

The virtual object may comprise a representation of an item of jewellery or an accessory such as a watch, a ring, a necklace, earrings or whatever else is desired. The virtual object may also comprise a representation of an item of clothing, a mask or wig or any other suitable alteration to the appearance of the user. Alternatively, the virtual object may be intended to add elements to an image that are not directly attached to a user, such as new background items. The second image may be opaque, or it may be partly or completely translucent or transparent. Distortion effects may be applied to the first image. This allows devices according to the invention to simulate translucent materials such as glass and gem stones which affect the appearance of objects seen through them.

The target object may be a predetermined object included in the first image for the purpose of positioning and orientating the occlusion object. The target object may be two-dimensional or three-dimensional. The target object may be an inanimate object, typically something that is worn by the user such as a pair of glasses or a bracelet that can be recognised by devices adapted according to the invention. The target object may be a substantially two-dimensional marker such as a sticker or tag. Again, typically, such a marker will be placed upon the user, in use.

Alternatively, the target object may be a portion of a user's anatomy which appears in the first image. A suitable target object may be the user's face, wrist, neck or hand, for example.

The occlusion object may have a shape which corresponds generally to at least a part of a user's anatomy. For example, the virtual object may be a watch and the occlusion object may be a model of a wrist. Where the target object is a part of the user's anatomy, the occlusion object may correspond to the same part of the anatomy. For example, the target object may be a user's face and the occlusion object may be a head.

It is not necessary for the occlusion object to match exactly an object in the first image to which it is intended to correspond, as the illusion of three-dimensional reality can be maintained even with some imperfection in occlusion.

The first image may comprise a plurality of target objects. The plurality of target objects may be used to position or orientate more accurately the occlusion object. Alternatively, one or more target objects may be associated with respective virtual objects and/or respective occlusion objects.

The virtual object may be chosen from a plurality of alternatives, for example in response to user input. Thus, for example, the user may select from a plurality of virtual watches.

The virtual model to be used may be chosen in dependence on a particular target object being recorded in the first image.

It may be desirable for the target object not to appear in the composite image. Thus, the virtual object may replace the target object (marker) in the composite image. The target object may be replaced by sampled image data from around the target object in the first image, in order that the target object is effectively blended out of the composite image. These techniques may be combined.

The composite image may be defined in terms of at least a two-dimensional pixel map of colour data ("a texture map" or "image buffer") and a two-dimensional pixel map of depth data ("a depth map" or "depth buffer"). This is a common approach in graphics descriptor languages, such as OpenGL. The depth map is used to determine which 3-D objects will be visible in the resultant 2-D image. The texture map, which may include colour and texture information, is used to determine the appearance of objects in the resultant 2-D image.

The occlusion object may be defined only in the depth map, whereby the occlusion object is not visible directly in the composite image. In this way, the occlusion object has depth information associated with it, and can be identified as being located in front of the virtual object, for example, from the perspective of the viewer, but the occlusion object does not have any colour information associated with it. Typically, the virtual object is defined in both the texture map and the depth map.

The composite image may be generated by reference to a texture map comprising image data from the first image and the virtual object and to a depth map comprising depth data from the virtual object and the occlusion object.

The present invention extends to a device for generating digital images. The device may comprise a camera, or other suitable image acquisition device, and data processing apparatus, such as a computer, for processing image data from the camera. Typically. the data processing apparatus is configured to carry out the method described above. The device may comprise a screen or similar display device for displaying the composite image.

The present invention also extends to computer software which configures general-purpose data processing apparatus to carry out the above method.

### Brief Description of the Drawings

Embodiments of the invention will now be described, by way of example only, and with reference to the accompanying drawings, in which:
Figure 1 is a diagram showing a first display system according to the invention in use;
Figure 2 is an image as recorded by the cameras in the first display system;
Figure 3 shows a model of a watch;
Figure 4 shows a model of the same watch, incorporating other elements;
Figure 5 is an image as produced by the first display system;
Figure 6 is a second image as produced by the first display system;
Figure 7 shows a wrist band suitable for use with the first display system;
Figure 8 is a second image as recorded by the cameras in the first display system;
Figure 9 is the second image after it has been processed by the first display system;
Figure 10 is a representation of a model of glasses on a head used by the first display system in processing the second image;
Figure 11 is the second image after it has been further processed by the first display system; and
Figure 12 is a second display system according to the invention.

### Detailed Description of Exemplary Embodiments

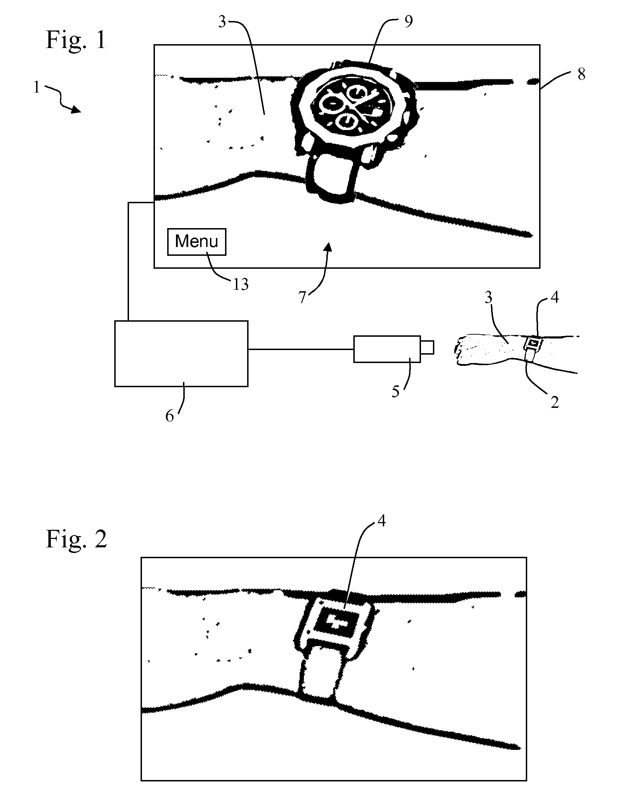

Figure 1 shows a first display system 1 according to the invention. A user straps a band 2 to their wrist 3. On the band 2 is a symbol 4 which is formed from highly contrasting colours, in this case black and white. The user then holds their wrist 3 in front of a camera 5. The recording made by the camera 5 is passed through processing apparatus 6, and the resulting first picture 7 is displayed on a screen 8. The first picture 7 shows the user's wrist 3, but in place of the band 2 an image of a watch 9 is displayed. The first picture 7 is a live image, and moves as the user moves. The user can choose different watches and model them on the screen 8, allowing the user to easily try on many different watches before making a purchase.

Figure 2 shows the image of the user's wrist 3 as it is recorded by the camera 5. The highly contrasting colours and distinctive shape make it easy for the apparatus 6 to identify the symbol 4. Once it has been identified, the orientation and position of the symbol 4 can be calculated by measuring its size and how it is distorted in the image. From this, the position and orientation of the user's wrist 3 can be deduced. Furthermore, the appropriate orientation and size for the image of the watch can be calculated, which allows the image of the watch 9 to be scaled appropriately.

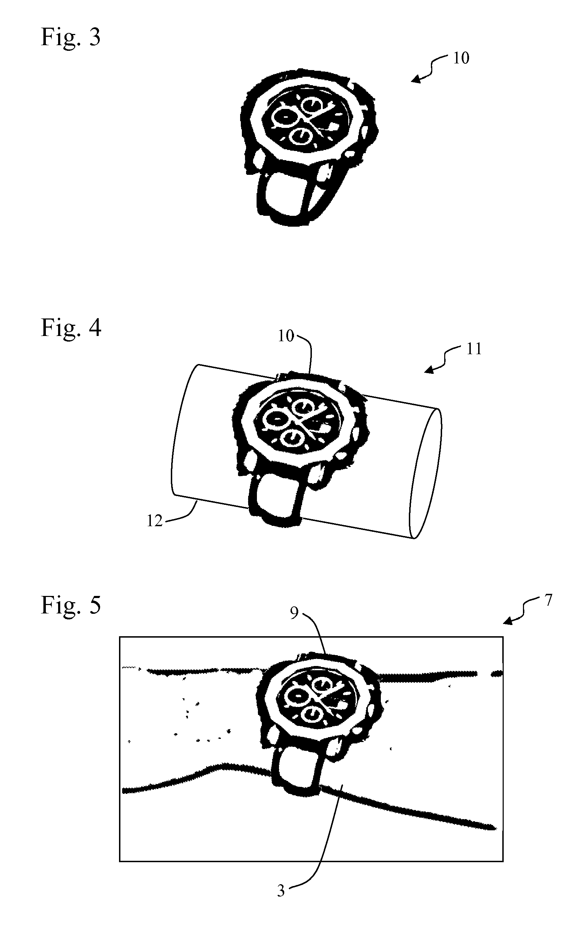

The image of the watch 9 as it is displayed to the user is calculated using a three dimensional model of the watch 10, as shown in Figure 3. The model of the watch 10 is incorporated into a first clipping model 11 as shown in Figure 4. The first clipping model 11 also comprises a cylinder 12, which acts as an occlusion object. The occlusion object is defined in the clipping model 11 in terms of depth information but without any texture information. The first clipping model 11 is orientated so that its face matches the orientation of the symbol 4 in the image recorded by the cameras 5. As can be seen in Figure 4, the cylinder 12 hides part of the watch strap in this orientation. The processing apparatus 6 removes the cylinder 12 and any part of the watch 10 that is hidden behind the cylinder 12 from the image. This produces the image of the watch 9. Hence the first clipping model 11 is used to occlude and remove (clip) those parts of the watch model 10 that are not needed. The image of the watch 9 is superimposed onto the image recorded by the camera 5 to produce the first picture 7 as shown in Figure 5. Because the cylinder 12 is defined in terms of depth information without any texture information, it is not visible in the first picture and the illusion is that the user's wrist, rather than the cylinder 12, occlude the hidden features of the watch 9. Thus, those parts of the watch and its strap that would be hidden behind the user's wrist 2, if the watch were real, are not shown. Removing part of the watch in this way prevents the watch from appearing to "float" over the user's wrist 2 in the first picture 7.

As the user rotates their wrist the image of the watch 9 moves as well, changing size, position and orientation as appropriate, as the position and orientation of the symbol 4 change. This allows the user to treat the screen 8 as a mirror, adjusting their position to check how their potential purchase looks from all angles. The impression of using a mirror is enhanced by positioning the camera directly beside the display, and also by reversing the displayed image left to right in the same way that a reflection is reversed.

In a variation of this embodiment, the first display system 1 may comprise two cameras 5 so that it can provide a three-dimensional display if required. The two cameras 5 record the image from different angles which can be combined to provide a stereoscopic image. The image of the watch 9 may be calculated from two similar angles so that it will appear to be three-dimensional as well. The image may then be displayed using a suitable screen 8. For example, the screen may provide the two images interleaved line by line, with each image formed from light polarized in a different direction. The user can then wear glasses with polarising lenses that filter the light differently for each eye. The user will then see the image from a different angle in each eye, creating a three-dimensional effect. Other methods for recording depth information may be used.

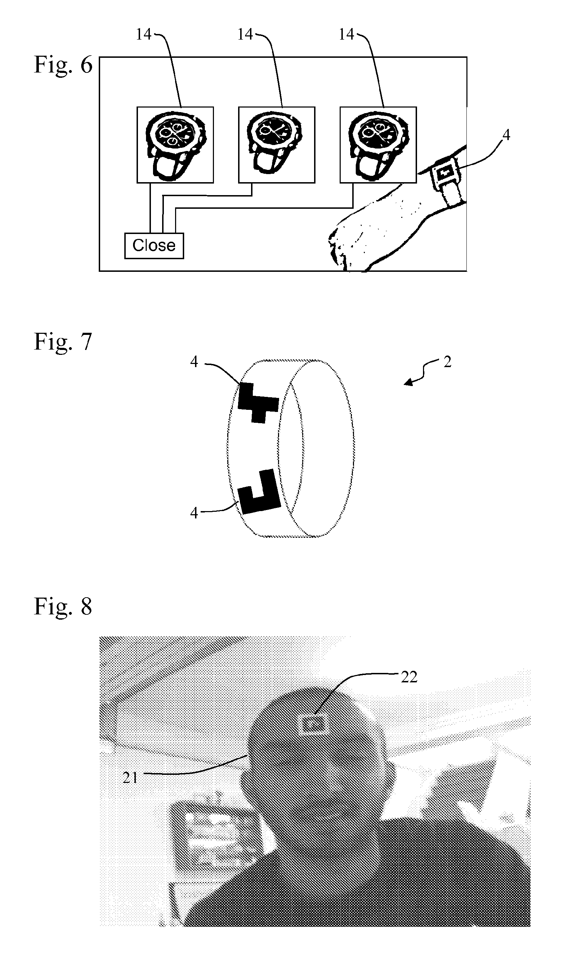

The user can change watches by simply gesturing. When the user passes the symbol 4 behind the menu box 13 on the screen 8 a menu opens up as shown in Figure 6. The menu comprises a number of selection boxes 14, and the user selects a new watch style by passing the symbol 4 behind their chosen selection box 14.

In an alternative mode of operation, the screen 8 is divided into sections, and the watch model 10 changes as the user moves the symbol 4 from section to section.

The first display system 1 can track multiple different symbols 4 simultaneously. This allows more than one person to use the first display system 1 at the same time. It also allows the strap 2 to be fitted with more than one symbol 4 as shown in Figure 7. Where only one symbol 4 is used the first display system 1 cannot keep track of the user's wrist from all angles, since they can turn their wrist so that the symbol 4 is pointing away from the camera 5. Using a strap 2 with multiple symbols 4 placed around its circumference ensures that the picture 7 will be correct from all angles. In addition, as the band 2 is adjusted to fit the user's wrist, the symbols will move relative to one another. The processing apparatus 6 can use the additional information provided by the relative positions of the symbols 4 to calculate the size of the user's wrist. The size of the strap used with the model of the watch 10 can then be adjusted as appropriate to provide a more convincing picture 7.

As the user is trying on watches, they are wearing the band 2 on their wrist 3. The band 2 is approximately the same size as a watch strap and provides a tactile experience to match the visual one provided by the screen 8. This helps to make trying on watches in this fashion more convincing for the user, and closer to the experience of actually wearing the watch they eventually purchase.

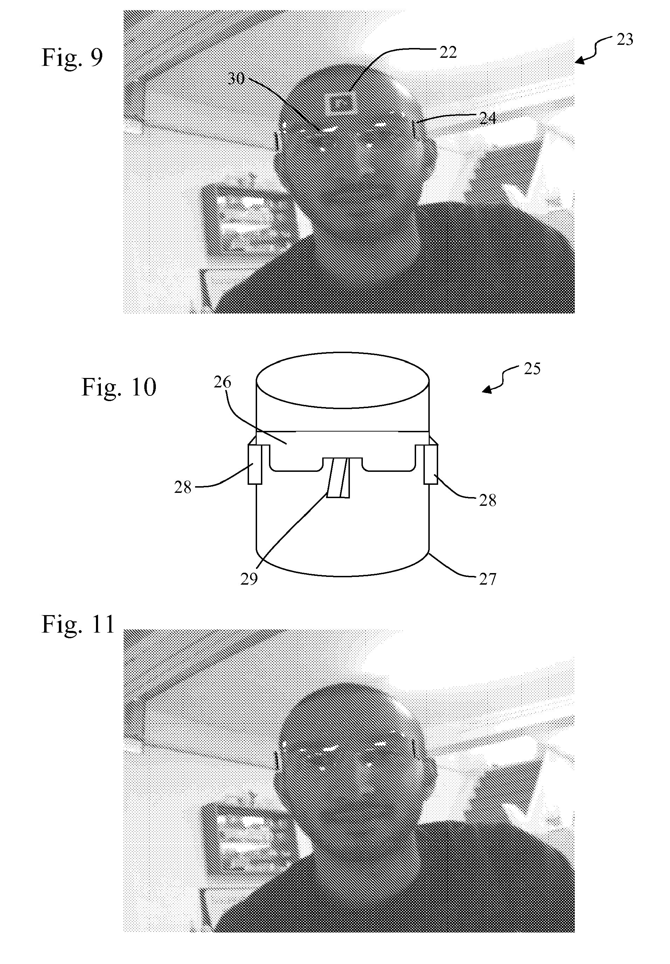

The first display system 1 shown in Figure 1 can also help the user try on glasses (spectacles). Figure 8 shows a user's head 21 as seen by camera 5 in a first display system 1. The user fixes a symbol 22 to their forehead. The first display system 1 identifies the position and orientation of the symbol, and uses this information to provide a picture 23 of the user wearing glasses 24, as shown in Figure 9.

The image of the glasses 24 is generated using a second clipping model 25, shown in Figure 10. The second clipping model 25 comprises both a model of the glasses 26 and a model head 27. The model head 27 includes shapes that are approximately similar to ears 28 and a nose 29. The second clipping model 25 is positioned to match the position of the user's head 21, and the model head 27 is removed along with any parts of the model glasses 26 that it obscures. The resulting image of the glasses 24 is superimposed onto the user's head 21. As the user turns their head 21 the glasses will appear to move with them, being clipped so that they appear to be hidden by the user's head, ears and nose when appropriate.

As is shown in Figure 11, the symbol 22 can be removed from the picture produced by the display system 1 if desired. This is done by sampling the colour of the recorded image around the symbol 22 and creating a "patch" of the same colour that can be laid over the symbol 122.

In order to create a more realistic picture, reflections 30 are incorporated into glasses 24. These reflections can be produced in two ways. Firstly, the room in which the display system 1 is installed can be photographed, using the cameras 5 or some other camera, and this image incorporated into the image of the glasses 24. The display system 1 can be provided with multiple photographs of the room and change between them depending on the time of day, to account for differences in illumination during the day and at night. Alternatively, the display system 1 can provide a best-guess approximation of the room by simulating typical light sources and incorporating their reflections into the image of the glasses 24. This simulation can be made more accurate by providing the display system 1 with information on the number and position of the light sources surrounding it.

Although the symbols 4, 22 shown in figures 1 to 3 and 7 to 9 are simple black and white designs, the first display system 1 according to the invention can use more complicated and coloured designs as symbols. The first display system 1 can also use three-dimensional shapes. When trying on glasses the user could be provided with a plain pair of glasses to wear. The first display system 1 then recognises the shape of these "blank" glasses and replaces them with an image 24 of the user's chosen pair of glasses. Conveniently, the user is now wearing the blank glasses as they try other pairs on. As is the case when the user tries on a watch while wearing a band 2, when trying on glasses the weight of the blank glasses helps to provide a more convincing experience. The blank glasses can also be provided with polarised lenses suitable for use with a three-dimensional display such as the one described above.

The display system 1 is not limited to use with watches and glasses. The user can try on other items of clothing such as rings, necklaces, earrings and other piercings, broaches and bracelets. The display system can also be used to model hair styles, clothing and accessories. It can be used to change the appearance of items that the user is already wearing, superimposing new items over the old.

Because the display system 1 can recognise a large number of symbols, the type of symbol used can convey additional information. For example, there may be one symbol for each item to be tried on or, more practically, one symbol for men's watches, one for women's watches, one for glasses and so on. Selection of the specific style can then be made by the user. The symbol might also convey information about the user that is helpful in producing a realistic picture, such as the circumference of their wrist or the width of their head. The display system 1 will then use a clipping model with the appropriate dimensions when producing the picture, taking into account factors such as the length of the watch strap required.

The display system 1 can offer the user many options to customise their purchase. For example, when choosing a ring the user can alter the shape of the ring, the metal used in the ring, the stones used as decoration and the pattern in which they are applied. This allows the user to try on a completely unique ring before committing to the purchase, whereupon the ring is manufactured according to the user's specification. The display system 1 can also be used to tailor other types of jewellery, as well as clothing and accessories.

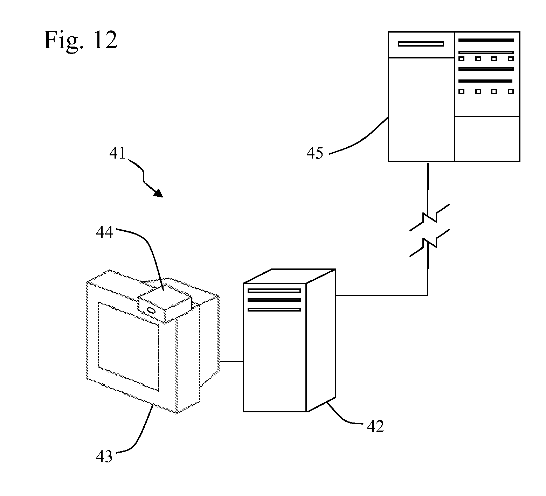

Figure 12 shows a second display system 41 according to the invention. The second display system 41 comprises a personal computer 42 provided with a monitor 43 and a webcam 44. In use, the personal computer 42 first connects to a server 45 over the internet. The server 45 is operated by a company that sells mail order glasses, and provides all the software necessary for the personal computer 42 to act as a display system according to the invention

The user selects the glasses they wish to try on and sits in front of the webcam 34, which records an image of the user. It is not necessary for the user to wear a symbol because their personal computer 42 uses facial recognition software to determine their position and orientation of their face in the image that is recorded by the webcam 34. The personal computer 42 then uses a clipping model such as the one shown in Figure 10 to produce an image of the user wearing the glasses they have selected. This is then displayed on the monitor 43. As above, the image is a live one, and the user can turn their head and inspect their glasses from different angles. They can also produce still photographs of themselves wearing the glasses, if they wish.

Once the user has found a pair of glasses that they like using the second display system 41 they reconnect to the server 45 using the personal computer 42 to place an order.

In summary, the invention provides a method for producing an image 7. The method comprises recording a first image of an object 4 of known dimensions, measuring the position and orientation of the object within the first image and superposing a second image 9 over the first image. The second image 9 comprises a view of a virtual model whose position and orientation are determined by the position and orientation of the object 4. The virtual model comprises both a visible portion and an occlusion portion, with neither the occlusion portion nor those parts of the visible portion covered by the occlusion portion being shown in the second image 9.

The features of the various embodiments described herein may be used in combinations not explicitly disclosed herein. Furthermore, the invention is not limited to use in relation to jewellery and clothing, but could be used to generate any suitable composite image.

## Claims

1. A method for generating a composite image, the method comprising:
recording a first image including an image of a target object;
determining the position and orientation of the target object within the first image; and
superposing a second image over the first image to generate the composite image, the second image comprising a view of a virtual model,
wherein the virtual model comprises a visible object and an occlusion object, the relative position and orientation of the visible object and the occlusion object determining which parts of the visible object are visible in the second image, and
wherein the position and orientation of at least the occlusion object in the second image are determined by reference to the position and orientation of the target object within the first image.

2. A method as claimed in claim 1, wherein the position and orientation of both the virtual object and the occlusion object in the second image are determined by reference to the position and orientation of the target object within the first image.

3. A method as claimed in claim 1 or 2, wherein the target object is a predetermined object included in the first image for the purpose of positioning and orientating the occlusion object.

4. A method as claimed in claim 1 or 2, wherein the target object is a portion of a user's anatomy which appears in the first image.

5. A method as claimed in claim 4, wherein the target object is a user's face.

6. A method as claimed in any preceding claim, wherein the occlusion object has a shape which corresponds generally to at least a part of a user's anatomy.

7. A method as claimed in any preceding claim, wherein the composite image is defined in terms of at least a two-dimensional pixel map of colour data ("the texture map") and a two-dimensional pixel map of depth data ("the depth map"), and
the occlusion object is defined only in the depth map, whereby the occlusion object is not visible directly in the composite image.

8. A method as claimed in claim 7, wherein the virtual object is defined in both the texture map and the depth map.

9. A method as claimed in any preceding claim, wherein the first image is a moving image and the composite image is a moving image.

10. A method as claimed in claim 9, wherein the first image is recorded in real time and the composite image is generated in real time.

11. A device for generating digital images, the device comprising a camera and data processing apparatus for processing image data from the camera,
wherein the data processing apparatus is configured to carry out the method of any preceding claim.

12. Computer software which configures general-purpose data processing apparatus to carry out the method of any of claims 1 to 10.
